# EUROPEAN PATENT APPLICATION

(11) **EP 4 726 594 A1**
(43) Date of publication of application: **15.04.2026**
(21) Application number: 25198140.3
(22) Date of filing: 26.08.2025
(51) Int. Cl.: G06F 30/15, G06F 30/27, G06F 30/28

(54) **SYSTEMS AND METHODS FOR PREDICTIVE MAINTENANCE OF HEAT TRACE APPLICATIONS BY HYBRID ARTIFICIAL INTELLIGENCE-COMPUTATIONAL FLUID DYNAMICS MODELING**

(30) Priority: 26.08.2024 US 202463687050 P
(71) Applicant: nVENT SERVICES GMBH, 8200 Schaffhausen (CH)
(72) Inventor: Mitra, Saurav, Houston (US); Deshpande, Kedar M., Houston (US)
(74) Representative: Barker Brettell LLP

(57) **Abstract**

Systems and methods for predicting future temperature data of a pipeline are provided. The system includes a data collection module to collect historical temperature data of a component, such as a pipeline, a calculation module to analyze the historical temperature data of the component and produce processed historical temperature data, and a machine learning module that receives the historical temperature data and the processed historical temperature data to predict future temperature data of the component.

## Description

### CROSS-REFERENCE TO RELATED APPLICATIONS

This application claims priority under 35 U.S.C. § 119 to United States Provisional Patent Application No. 63/687,050 filed on August 26, 2024, the entire contents of which is incorporated herein by reference.

### BACKGROUND

In the oil and gas industry, pipelines must be heated over distances of many miles. Skin effect electric heat tracing systems are ideally suited for long transfer pipelines up to 12 miles (20 km) per circuit. The system is engineered for the specific application, non-limiting examples of which include material transfer lines, snow melting and de-icing, tank foundation heating, subsea transfer lines and prefabricated, pre-insulated lines. In a skin-effect heating system, heat is generated on the inner surface of a ferromagnetic heat tube that is thermally coupled to the pipe to be heat traced. An electrically insulated, temperature-resistant conductor is installed inside the heat tube and connected to the tube at the far end. An alternating current (AC) is passed through the insulated conductor and returns through the heat tube.

Thermal performance of these pipelines should be monitored so that maintenance interventions can be planned proactively, minimizing downtime, reducing safety risks and maximizing asset lifespan. Predictive maintenance based solely on data analytics may require extensive data collection efforts and IoT infrastructure which can be costly and time-consuming. Thus, there is a need for improved predictive maintenance for pipeline heating and other heat trace applications.

### SUMMARY

Some embodiments of the invention provide a hybrid Artificial Intelligence-Computational Fluid Dynamics (AI-CFD) framework that combines machine learning and CFD simulations to predict a future pipeline maintain temperature with high fidelity.

According to some embodiments, a system is provided, including a data collection module, a calculation module, and a machine learning module. The data collection module collects historical temperature data of a component. The calculation module analyzes the historical temperature data of the component and produces processed historical temperature data of the component. The machine learning module receives a plurality of inputs, including the historical temperature data and the processed historical temperature data, to predict future temperature data of the component.

According to some embodiments, a method is providing, including collecting a first data set relating to temperature data of a pipeline over a time period and processing the first data set using a fluid dynamics analysis that outputs a second dataset related to additional temperature data of the pipeline over the time period. The method also includes recording the second data set, and providing the first data set and the second dataset to a machine learning module that outputs a third data set relating to predicted future temperature data for the pipeline.

According to some embodiments, a system for predicting future temperature of a pipeline is provided. The system includes a fiber-optic distributed-temperature sensing (DTS) system to track and record temperature data related to a pipeline over a time period, and a computation fluid dynamics (CFD) simulator that receives the temperature data as an input and outputs processed temperature data over the time period. The system also includes a machine learning module that receives the temperature data and the processed temperature data and outputs predicted future temperature data for the pipeline.

Aspects and embodiments of the invention are defined in the claims. Feature(s) of the aspects/embodiments of the invention or features otherwise disclosed herein may be used separately, together and/or be interchangeable wherever possible. Where features are, for brevity, described in the context of a single embodiment, those features may also be provided separately or in any suitable sub-combination. Features described in connection with the system(s) or any feature(s) or component(s) described may have corresponding features definable and/or combinable with respect to a method or vice versa, and these embodiments are specifically envisaged.

The foregoing and other aspects and advantages of the invention will appear from the following description. In the description, reference is made to the accompanying drawings which form a part hereof, and in which there is shown by way of illustration a preferred embodiment of the invention. Such embodiment does not necessarily represent the full scope of the invention, however, and reference is made therefore to the claims and herein for interpreting the scope of the invention.

### DESCRIPTION OF THE DRAWINGS

FIG. 1 is a schematic diagram of an electric heat trace (EHT) control system according to some embodiments.
FIG. 2 is a schematic diagram of another control system according to some embodiments.
FIG. 3 is a diagram of hardware for implementing a temperature sensing system and a management system of a control system.
FIG. 4 is schematic diagram of another control system, according to some embodiments, including a skin effect heating system.
FIG. 5 is a flowchart of a process using a hybrid Artificial Intelligence-Computational Fluid Dynamics (AI-CFD) framework according to some embodiments.
FIG. 6 is an example cross-section of a heat pipe in the EHT control system of FIG. 1.
FIG. 7 is a flow diagram of inputs to a machine learning model according to the process of FIG. 5.
FIG. 8 is process diagram of another process using a hybrid Artificial Intelligence-Computational Fluid Dynamics (AI-CFD) framework according to some embodiments.
FIG. 9 is a graph of output data comparing traditional data modeling and data modeling using a hybrid Artificial Intelligence-Computational Fluid Dynamics (AI-CFD) framework according to some embodiments.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown, but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

Generally, embodiments of the present disclosure provide a hybrid Artificial Intelligence-Computational Fluid Dynamics (AI-CFD) framework for use with predictive modeling in heat trace applications. The framework combines machine learning and CFD simulations that predict future pipeline maintain temperatures with high fidelity, which enables pipeline operators to take proactive measures that mitigate operational risks. The process combines historical data of pipeline and ambient temperatures that are obtained from field measurements. The pipeline and ambient temperatures are used as input boundary conditions for CFD simulations that output a CFD solution. The CFD solution generates a temperature field at every point in time and space for an operational setup, such as, for example, an operational skin effect trace heating systems (STS) set up. Temperatures of the different components from CFD solutions and field measurements of pipeline and ambient temperatures form the training data set in a machine learning model. The combination of the physical-based model and the machine learning techniques formulate an accurate approach to predicting future temperatures for a field set up.

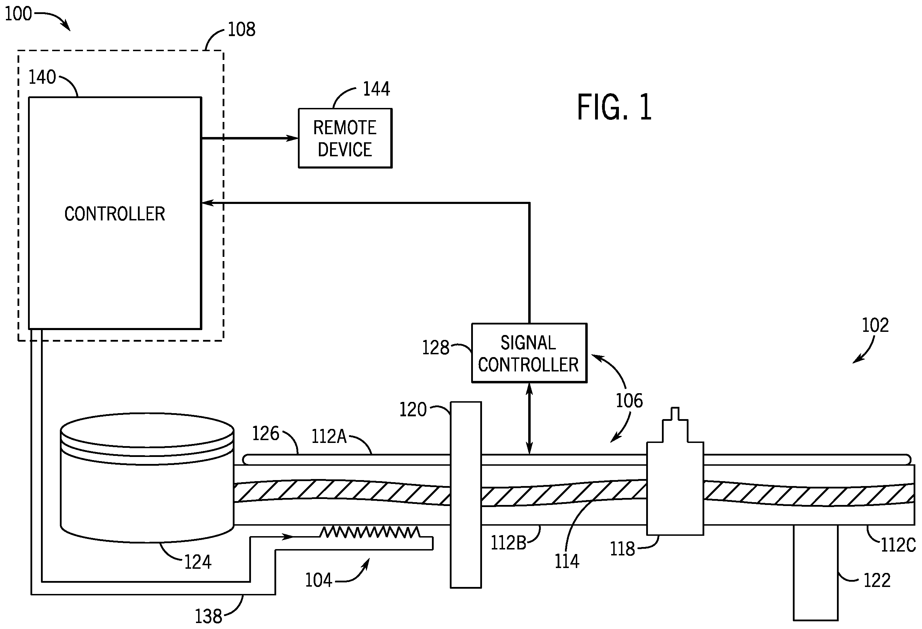

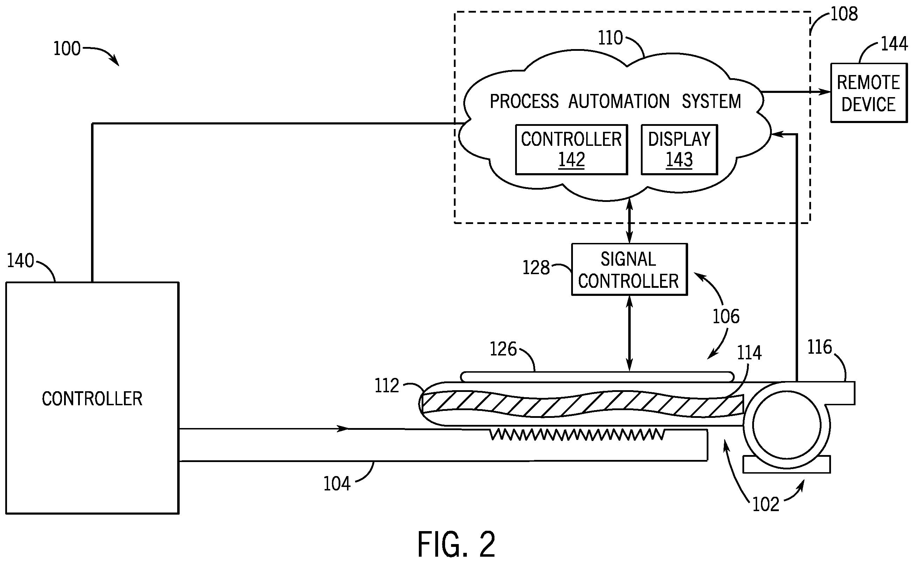

In view of the above, FIG. 1 illustrates a control system 100 according to some embodiments of the invention. The control system 100 may also be referred to as a heating system, an electric heat trace (EHT) system, a pipeline management system, and/or a pipeline temperature management system. The control system 100 can be used with a pipeline system 102 (e.g., a "fluid transport system" or "pipeline network") and can include at least a heating system 104 (e.g., a heating circuit), a temperature sensing system 106, and a management system 108. FIG. 2 illustrates another control system 100, according to some embodiments, including all the components of FIG. 1, as well as a process automation system 110. While certain components may be described below with reference to the system 100 of FIG. 1 or FIG. 2, it should be noted that such components may be incorporated into either system 100 of FIG. 1 or FIG. 2, even if not specifically described in that manner.

With reference to the pipeline system 102, in some embodiments, the pipeline system 102 can include one or more pipes 112 and can transport a fluid or gas 114. For example, as shown in FIG. 1, the pipes 112 can include a first pipe 112A, a second pipe 112B, and a third pipe 112C coupled together. In some embodiments, as shown in FIG. 2, the pipeline system 102 can also include a pump 116 and a pump motor (not shown) configured to pump the fluid 114 throughout the pipes 112. However, some applications may not require a pump for fluid flow, such as gravity-fed applications.

Additionally, in some embodiments, the pipeline system 102 can include one or more storage or transportation devices, fittings, and/or support structures. Storage or transportation devices may be devices other than pipes that are capable of storing and/or transporting fluids such as, but not limited to, tanks and/or storage vessels. Fittings may include, but are not limited to, adaptors, elbows, couplings, unions, nipples, reducers, tees, crosses, end caps, electrical or mechanical valves, flanges, and/or other devices interconnected with pipes 112 and storage or transportation devices. Support structures may include, but are not limited to, pipe anchors and/or pipe guides configured to hold the pipes 112 in place and/or prevent rotation of the pipes 112.

As an example, as shown in FIG. 1, the pipeline system 102 can include a valve 118, a flange 120, a pipe anchor 122, and a holding tank 124. The valve 118 can be coupled to the second pipe 112B and the third pipe 112C. The flange 120 can be coupled to the first pipe 112A and the second pipe 112B. The pipe anchor 122 can be coupled to the third pipe 112C, and can be configured to hold the third pipe 112C in place. The holding tank 124 can be coupled to an end of the first pipe 112A.

Ideally, the pipeline system 102 has a "uniform thermal profile" in which there are no heat sinks along the pipeline system 102 that would cause excessive amounts of heat to be lost to surrounding areas. However, in reality, the fluid 114 may exhibit different temperatures along different locations within the pipeline system 102 due to heat sinks and other non-uniform heat loss. For example, certain components of the pipeline system 102 such as, but not limited to, valves, flanges, pipe anchors, and/or pipe guides may be more susceptible to heat loss and, thus, may be referred to as "high heat loss points," such that fluid 114 may have a lower temperature adjacent these high heat loss points. In addition, poorly installed thermal insulation around the pipes 112 can jeopardize pipeline heat loss uniformity. For example, improperly installed insulation may be exposed to moisture, and wet insulation may result in excessive heat loss at such locations.

Accordingly, it may be desirable to monitor fluid temperatures at or along a pipe 112 near one or more high heat loss points and/or on the high heat loss points, where the fluid 114 may be more prone to freezing or dropping below a temperature setpoint as compared to other locations along the pipes 112. Thus, referring now to the temperature sensing system 106, in some embodiments, the temperature sensing system 106 can comprise or include one or more linear temperature sensors. Further, in some embodiments, the temperature sensing system 106 can comprise a distributed temperature sensing (DTS) system, which can be configured to sense temperatures at multiple data points along the length of an optical fiber 126. Accordingly, as shown in FIGS. 1 and 2, the optical fiber 126 can be arranged throughout the pipeline system 102, such as on one or more outer surfaces of the pipes 112. Alternatively or additionally, in some embodiments, the optical fiber 126 can be arranged inside the pipes 112.

In some embodiments, the optical fiber 126 may be installed along substantially the full length of the pipeline system 102. Accordingly, with reference to FIG. 1, the optical fiber 126 can be placed on the pipes 112A, 112B, 112C near the valve 118 to obtain a temperature associated with the fluid 114 at the valve 118, near the flange 120 to obtain a temperature associated with the fluid 114 at the flange, and near the pipe anchor 122 to obtain a temperature associated with the fluid 114 near the pipe anchor 122. Thus, the temperature sensing system 106 can determine and output temperature values associated with the fluid 114 in the first pipe 112A, the second pipe 112B, and/or the third pipe 112C, and/or at specific components of the pipeline system 102, to the management system 108. In other embodiments, the optical fiber 126 is installed along a portion of the full length of the pipeline system 102.

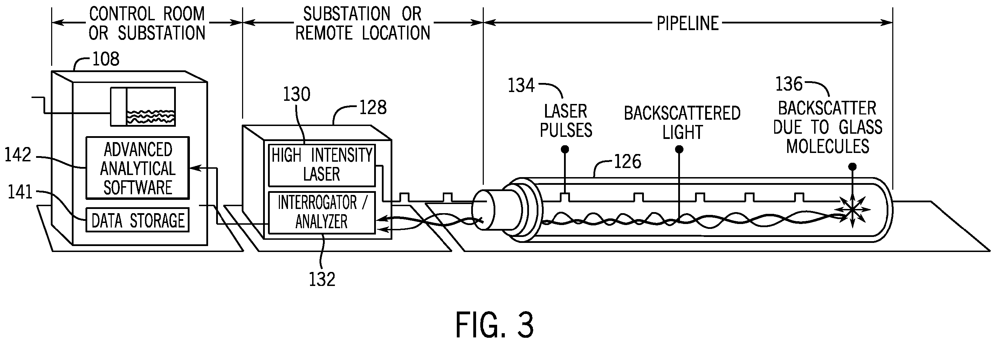

In some embodiments, as shown in FIGS. 1 and 2, the temperature sensing system 106 further includes a signal controller 128 (e.g., a "DTS unit"). A more detailed hardware diagram of the temperature sensing system 106, including the signal controller 128 and the optical fiber 126, is shown in FIG. 3. Generally, the signal controller 128 can be configured to provide a laser source to the optical fiber 126 and to process signals from the optical fiber 126 in order to determine a plurality of temperature values at various locations along the optical fiber 126.

More specifically, as shown in FIG. 3, the optical fiber 126 can be located along the pipeline system 102 and can be coupled to the signal controller 128, e.g., via a transit cable (not shown for clarity). The signal controller 128 can include a high intensity, pulsed laser 130 and an interrogator/analyzer 132. In some embodiments, the signal controller 128 can be located remote from the pipeline system 102, such as at a substation. The signal controller 128 can further be coupled to the management system 108 which, in some embodiments, can include an industrial personal computer rack with data storage 141 and a controller 142 with a processor capable of executing software programs, and which can be located at a substation or a separate control room.

As shown in FIG. 3, the signal controller 128 can emit laser pulses through the optical fiber 126 via the laser 130 and can receive backscattered light via the interrogator/analyzer 132. For example, the pulsed laser 130 is coupled to the optical fiber 126 through a directional coupler (not shown). The pulsed laser 130 can generate laser pulses 134 at a high frequency (e.g., every 10 ns). Light is backscattered as each pulse 134 propagates through the core of the fiber 126, owing to changes in density and composition as well as molecular and bulk vibrations. A mirror (not shown) or any other desired reflective surface may be used to direct the backscattered light 136 to the analyzer 132. The velocity of light propagation in the optical fiber 126 is well defined and modeled, and the distance that the pulse 134 travels along the fiber 126 before being reflected (e.g., partially) as backscattered light 136 can be calculated by the analyzer 132 using the deterministic collection time of the backscattered light 136 and reflectometry methods such as optical frequency domain reflectometry (OFDR) or optical time domain reflectometry (OTDR). For example, the interrogator/analyzer 132 is able to measure and analyze backscattered light 136 and can be, for example, a specialized Optical Time Domain Reflectometer that includes software to analyze specific spectral signals for distributed or point temperature information. Thus, a temperature of the pipeline 102 and a distance along the pipeline 102 associated with this temperature can be determined simultaneously from the backscattered light 136. Furthermore, the signal controller 128 can output the temperature and location values to the management system 108. In some other examples, the signal controller 128 can output an array with temperature, location, and acquisition time values to the management system 108.

While the systems 100 illustrated in FIGS. 1 and 2 include a single optical fiber 126 running the length of the pipeline system 102, in some embodiments, multiple optical fibers 126 can be used. According to one example, the temperature sensing system 106 can include a first optical fiber 126 that lies on top of the pipeline and a second optical fiber 126 that lies along a bottom of the pipeline. As a result, in such embodiments, a temperature gradient over the pipeline cross-section may be determined based on temperature data from the dual optical fiber lines 126.

Accordingly, the temperature sensing system 106, in the form of a DTS system, can provide thermal intelligence by monitoring the temperature along the entire pipeline 102. More specifically, the DTS system 106 can monitor temperatures, for example, at every meter segment of the pipeline 102 and, in some embodiments, may also monitor temperatures at one or more "off-pipe" areas, e.g., to be used as ambient temperature measurements. However, in some embodiments, "point" temperature sensors can be positioned along the pipeline 102 to obtain temperature values at discrete points along the pipeline and/or positioned away from the pipeline for ambient temperature measurements. For example, such temperature sensors can include resistance temperature detectors (RTDs). Accordingly, while reference is made below with respect to temperature data from the DTS system 106, in some embodiments, such temperature data can be collected from RTDs or other point temperature sensors.

Referring back to FIGS. 1 and 2, with reference now to the heating system 104, in some embodiments, the heating system 104 can heat the pipeline system 102 in order to transfer heat to the fluid 114. In some embodiments, the heating system 104 can include one or more heat trace cables 138 such as, but not limited to, standard heating cables, self-regulating heating cables, power-limiting heating cables, skin-effect heating cables, etc. The heat trace cables 138 can be operated by the management system 108. That is, the management system 108 can control energization and deenergization of the heat trace cables 138, e.g., by selectively controlling connection of the heat trace cables 138 to a power source, as further described below. In some embodiments, the heat trace cables 138 can be coupled together, in series and/or parallel, so that all of the heat trace cables 138 are energized or not energized in unison. Furthermore, in some embodiments, the heat trace cables 138 or sections thereof can be individually controlled by the management system 108, thus allowing the management system 108 to increase or decrease heating at certain locations along the pipeline system 102.

With reference to the management system 108, in some embodiments, the management system 108 can include at least one controller. The controller can be any controller suitable for receiving inputs from one or more sensors, devices, or sources of data representing temperature or other parameters and can be capable of controlling components of the system 100 such as, but not limited to, the heating system 104, the pump 116, the temperature sensing system 106, etc. For example, in some embodiments, the controller can be a standalone controller such as a microcontroller that can include at least one processor and at least one memory or a programmable logic controller (PLC). The controller can be configured to execute a management program in accordance with one or more of the methods described below (e.g., the processor of the controller can execute a management program stored as instructions in memory).

In some embodiments, the management system 108 can directly control the heating system 104 and/or the temperature sensing system 106, and/or can communicate with and/or provide instructions to dedicated controllers of the heating system 104 and/or the temperature sensing system 106. In some embodiments, the management system 108 can also communicate with other components of the system 100 or outside the system 100 to obtain certain operational parameters including, but not limited to, pump parameters, flow rates (e.g., at pipeline inlets and outlets), valve positions, weather conditions, heating cable parameters (e.g., voltage, current, power output or consumption, etc.), temperature sensor values, etc.

For example, as shown in FIG. 1, the management system 108 can comprise a controller 140 that is coupled to and operates the heating system 104 in order to selectively energize the heating cables 138 and heat the pipeline system 102. For example, the controller 140 can selectively energize one or more of the heating cables 138 based on received temperature values and/or other parameter values, in accordance with the methods described below. As shown in FIG. 1, the controller 140 is in further communication with the signal controller 128 of the temperature sensing system 106.

As another example, as shown in FIG. 2, the management system 108 can comprise a controller 142 (which may include at least one processor and memory) that is part of the process automation system 110. That is, the process automation system 110 can be directly, indirectly, or wirelessly connected to one or more sensors as well as the controller 140, e.g., a dedicated controller of the heating system 104, and the signal controller 128 of the temperature sensing system 106. As a result, for example, the temperature sensing system 106 can output values to the process automation system 110, including one or more temperature values associated with locations in the pipeline system 102. Further, any of the controllers 128, 140, 142 may be capable of analyzing sensor data and outputting reports or control instructions in accordance with the methods described herein. That is, any of the controllers 128, 140, 142 can include a computer readable non-transitory memory that includes instructions (e.g., computer-executable instructions) that may be executed by a processor in order to perform operations in accordance with any of the methods described herein. Additionally, in some embodiments, the pump 116 can be coupled to the process automation system 110 and can be controlled by the controller 142 of the process automation system 110.

As yet another example, FIG. 3 illustrates the management system 108 coupled to the temperature sensing system 106 in order to receive the temperature values and respective locations, e.g., from the signal controller 128. Additionally, in some embodiments, the management system 108 can provide the functionality of and replace the signal controller 128 of the temperature sensing system 106.

Furthermore, in some embodiments, the management system 108 can be coupled to and in communication with a remote device 144, as shown in FIGS. 1 and 2. The remote device 144 can be a user device such as, but not limited to, a desktop computer, a smartphone, a tablet computer, or another suitable computing device. For example, the management system 108 (i.e., the controller 140/142) can communicate with the remote device 144 to send and/or receive data, control instructions, recommendations, or algorithms (including software updates), reports, alerts, warnings, etc. In some embodiments, the remote device 144 can be in communication with the management system 108 via a communications system such as the internet, a wide-area-network, or a local-area-network. In some examples, the remote device 144 can include and execute a dedicated application (or "app") that allows the user to remotely communicate with the management system 108 and/or perform any combination of the above functions. For example, predicted future temperature values may be displayed to a user via a display 143 of the management system 108 and, optionally, remotely communicated to the user via a display (not shown) of the remote device 144.

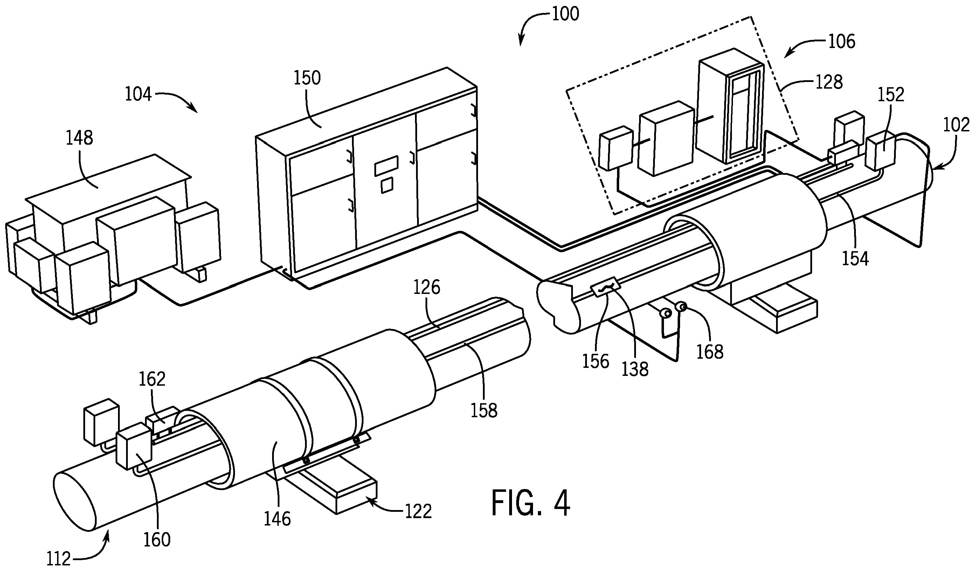

FIG. 4 illustrates another control system 100 and, more specifically, a skin effect heat management system, according to some embodiments. As shown in FIG. 4, the control system 100 can be used with a pipeline system 102 and can include a heating system 104 and a temperature sensing system 106. The pipeline system 102 can include one or more pipes 112 and anchors 122. In some embodiments, the pipe 112 can be a pre-insulated pipe, which may be surrounded by composite thermal insulation and cladding 146. A pre-insulated pipe 112 may, for example, may provide higher quality, construction schedule improvements, ease of installation, lower installed cost, durable construction, and reduced maintenance compared to uninsulated pipes.

Referring still to FIG. 4, the heating system 104 can be a skin effect heat tracing system (STS), including a transformer 148, a control panel 150 (e.g., part of or in communication with a management system 108, not shown in FIG. 4), one or more power connection boxes 152, one or more heat tubes 154 (e.g., incorporating one or more skin effect heating cables 138 routed therethrough), one or more pullboxes and/or splice boxes 156, one or more couplings 158, and one or more end termination boxes 160. The heat tubes 154 can be disposed along the length of pre-insulated pipe 112. The heat tubes 154 may act as heaters for the pipe 112 and may receive power from a power source (not shown) through the transformer 148 and the power connection boxes 152. That is, power may be selectively applied (e.g., using switching circuitry) to the heat tubes 154 through the power connection boxes 152 based on control signals generated by a controller (such as the controller 140 of FIGS. 1 and 2) in the control panel 150. These control signals may be generated automatically during the regular course of maintaining a temperature of the fluid 114 in the pipe 112 at or around, e.g., a predetermined setpoint temperature, such as a temperature that exceeds the nominal melting point of the process fluid by a predetermined amount.

Additionally, as shown in FIG. 4, the temperature sensing system 106 can be a fiber optic-based DTS system to measure temperature across the pipe 112. For example, the temperature sensing system 106 can include an optical fiber line 126 with associated processing circuitry in a signal controller 128, and one or more associated fiber optic splice boxes 162, fiber optic pull boxes 164, and/or fiber optic end boxes (not shown). The signal controller 128 can include a frequency generator, a laser source, an optical module, a high frequency mixer, a receiver, and a microprocessor unit, and may be coupled to the fiber optic line 126 disposed along the pipe 112, for example, through a fiber optic splice box 162. DTS data (e.g., spatio-temporal temperature data for the pipeline 102) may be generated through the analysis of backscattered signals, as described above with respect to FIG. 3, with each data point of the DTS data representing a temperature of the pipeline 102, the time at which the temperature was measured, and the location along the pipeline 102 at which the temperature was measured.

As described above, the management system 108 (including any combination of the controllers 140, 142, 128) can obtain and/or analyze temperature data of the pipeline system 102. Furthermore, in some embodiments, the management system 108 can also including processes for predicting future pipeline temperature data.

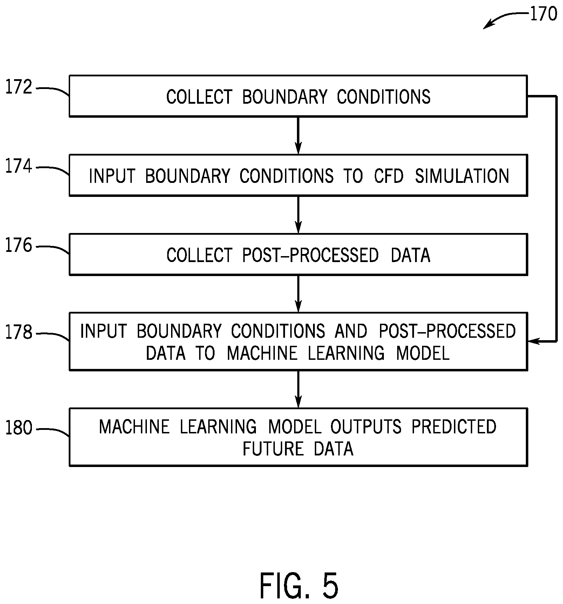

For example, turning to FIG. 5, a hybrid AI-CFD process 170 for predicting future pipeline temperature data is illustrated. Generally, the process 170 can include collecting boundary conditions (step 172), inputting boundary conditions to a CFD simulation (step 174), collecting post-processed data (step 176), inputting the boundary conditions and the post-processed data to a machine learning model (step 178) and outputting, from the machine learning model, predicted future data (step 180).

In some embodiments, the steps of process 170 can be stored as computer-readable instructions in memory of the management system 108 and executed by one or more of the controllers 140, 142, 128. For example, in one embodiment, the management system 108 and, more specifically, one or more of the controllers 140, 142, 128 can include modules configured to carry out one or more of the steps below, such as a data collection module to collect historical temperature data of a component (e.g., step 172), a calculation module to analyze the historical temperature data of the component and produce processed data (e.g., steps 174, 176), and a machine learning module that receives a plurality of inputs, including the historical temperature data and the processed data, to predict future temperature data of the component (e.g., steps 178, 180), though the steps or combination of steps can be carried out by other modules or other combinations of modules in other embodiments.

Looking more specifically to FIG. 5, at the first step 172, a plurality of boundary conditions are collected. As noted above, thermal performance of a pipeline, such as any of the pipelines described above, can be monitored. In some embodiments, the temperature sensing system 106 can measure temperature across a pipe. As a result, the data collected by the temperature sensing system 106 can represent a temperature of the pipeline 102, the time at which the temperature was measured, and the location along the pipeline 102 at which the temperature was measured. In some embodiments, the data collected by the temperature sensing system 106 represents some or all of the boundary conditions of the first step 172. Additionally, in some embodiments, the boundary conditions can further include ambient temperature data, collected by the temperature sensing system 106 and/or otherwise obtained by the management system 108 (e.g., via communication with a weather service) and geometry information about the pipeline. Further, in some embodiments, the boundary conditions can include other data relating to the pipeline obtained in the field, such as fluid flow rates within the pipeline. In some examples, the boundary conditions can further include the type or composition of the fluid 114 (e.g., water, oil, gas, etc.).

With continued reference to FIG. 5, at step 174, the boundary conditions collected during the first step 172 are input into a CFD simulation. A CFD simulation, such as a CFD solver, solves mathematical equations that describe the fluid flow within a simulation environment. In this case, the CFD simulation is designed to analyze the boundary conditions in order to describe the fluid flow within the pipeline 102. In some embodiments, Ansys Fluent is used as the CFD solver. In some embodiments, the CFD simulation will start by pre-processing the boundary conditions. For example, during the pre-processing step, the CFD simulation defines the parameters of the pipeline 102, including defining the geometry of the pipeline 102, identifying properties of the materials involved, and setting boundary conditions. In some embodiments, the CFD simulation is configured to receive information from a user, such as, for example, the location of heat sources and heat sinks. The CFD simulation may also be configured to receive instructions from a user, such as, for example, instructions to only analyze a layer or subsection of the pipeline 102. In some embodiments, the CFD simulation will receive this information and these instructions via the boundary conditions of the first step 172. In addition or alternatively, the CFD simulation will receive this information and these instructions directly from a user.

Then, still during step 174, the CFD simulation processes the boundary conditions. During the processing step, the CFD simulation follows a defined set of steps to calculate the fluid flow within the pipeline 102 based on the boundary conditions. Finally, the CFD simulation outputs the results of the CFD analysis. More specifically, the CFD simulation outputs processed data related to a temperature distribution of the pipeline 102 over time and space (e.g., temperature of the pipeline, the time at which the temperature was measured, and the location along the pipeline 102 at which the temperature was measured). At step 176, the post-processed data is collected.

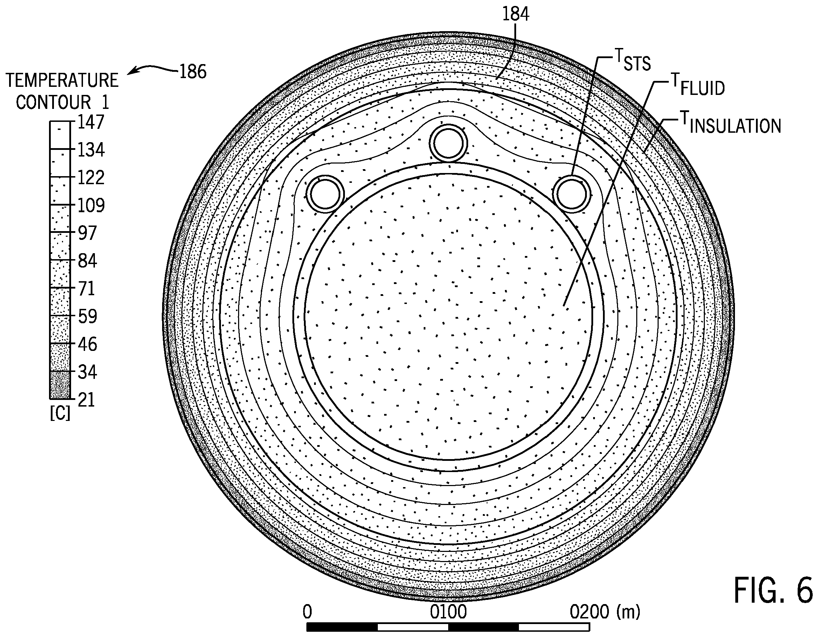

With reference to FIG. 6, an example cross-section 184 of the pipeline 102 is illustrated, representing an example output of the CFD simulation (e.g., the output collected at step 176). With reference to a legend 186, the cross-section 184 includes data related to the temperature of the pipeline 102 at each point within the pipeline 102. The temperature distribution is calculated by the CFD simulation, and the resulting data is the post-processed data that is collected in the step 176 of the process 170. Accordingly, the post-processed data relates not only to points along a surface of the pipeline but to points at additional radial locations through and/or radially outside of the pipeline 102 along the distance of the pipeline 102. For example, in some embodiments, the data is directed toward one or more layers or subsections of the pipeline 102, such as one or more insulation layers (T_{INSULATION}), heater cable layers (T_{STS}), and/or fluid temperature layers (T_{FLUID}), etc. However, it should be noted that, in some embodiments, the process 170 is configured to analyze only certain layers or certain lengths of the pipeline 102.

Referring back to the process 170 of FIG. 5, at step 178, the boundary conditions from the first step 172 and the processed data from the third step 176 are both input into a machine learning model. In some embodiments, the machine learning model is an algorithm. In some embodiments, the machine learning model is a Python Script. In some embodiments, the machine learning model is an open-source machine learning model. The machine learning model runs an algorithm that combines the two inputs to calculate predicted future temperature data related to the pipeline 102.

Finally, at step 180, the machine learning model outputs predicted future data about the temperature of the pipeline 102. In some embodiments, the predicted future data includes a temperature of the pipeline 102, the time at which the temperature is predicted to occur, and the location along the pipeline 102 that the temperature is predicted to occur. In some embodiments, the predicted future data is output as a report, a vector plot, a contour plot, or a visual representation of the pipeline 102. In some embodiments, the predicted future data is directed to a processor (e.g., of the controller 140, 142, 128) for further analysis. In some embodiments, the predicted future data is directed to a user interface or display 143, e.g., of the management system 108 or of the remote device 144. For example, the processor (e.g., of the controller 140, 142, 128) may generate a report, to be displayed via the display 143, including the predicted future data. Additionally, in some embodiments, the predicted future data is directed toward a certain future time period, such as the next 24 hours, the next 48 hours, the next 7 days, etc.

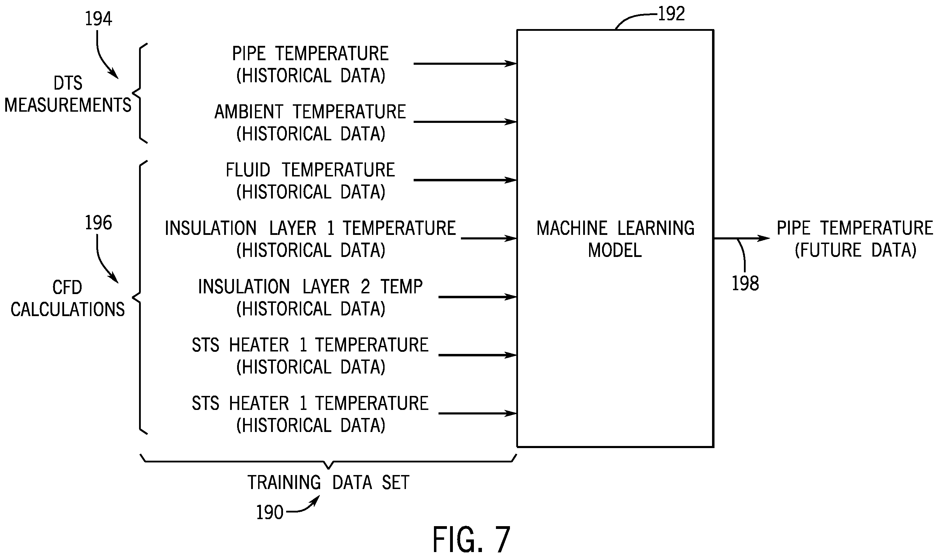

With further reference to steps 178 and 180, FIG. 7 illustrates an example training data set 190 for a machine learning model 192, including several types of data. In some embodiments, the training data set 190 includes a plurality of boundary conditions 194 such as, for example, the pipeline temperature and the ambient temperature data of the pipeline 102. As described above, the pipeline temperature and ambient temperature can be measured directly from the pipeline 102 using methods such as, for example, DTS measurement. For example, in some embodiments, the boundary conditions 194 will include telemetry data, such as DTS measurements. Additionally, in some embodiments, the boundary conditions 194 can include the ambient temperature, the pipeline temperature, and a flow rate. In some embodiments, the boundary conditions 194 may further include different measurements related to the pipeline 102.

With continued reference to FIG. 7, the training data set 190 further includes a processed data set 196. The processed data set 196 includes data calculated by the CFD simulation at step 174 of the process 170 and collected during step 176 of the process 170 (as shown in FIG. 5). In some embodiments, the processed data set 196 includes temperature information about the fluid within the pipeline and different layers of the fluid within the pipeline (e.g., as described above with reference to the cross-section 184 in FIG. 6), and/or heaters and heatsinks within the pipeline 102. In some embodiments, the processed data set 196 includes other calculated data related to the pipeline 102. In some embodiments, all data that is processed by the CFD simulation and used in the training data set 190 is part of the processed data set 196.

Referring still to FIG. 7, the boundary conditions 194 and the processed data set 196 are input into the machine learning model 192. In some embodiments, the boundary conditions 194 make up about 80% of the training data set 190 and the processed data set 196 makes up about 20% of the training data set 190. In some embodiments, the split between the boundary conditions 194 and the processed data set 196 is higher or lower. The machine learning model 192 uses the input data, along with an internal algorithm, to calculate a data set of predicted future temperatures 198 relating to the pipeline 102.

While the machine learning model 192 can take in the boundary conditions 194 and the processed data set 196 in some embodiments, the model 192 can take in additional predictive data in other embodiments to further enhance predictions. For example, in some embodiments, future weather forecasts, including temperature and wind speeds, can be input to the machine learning model 192 in order to assist with future ambient temperature predictions.

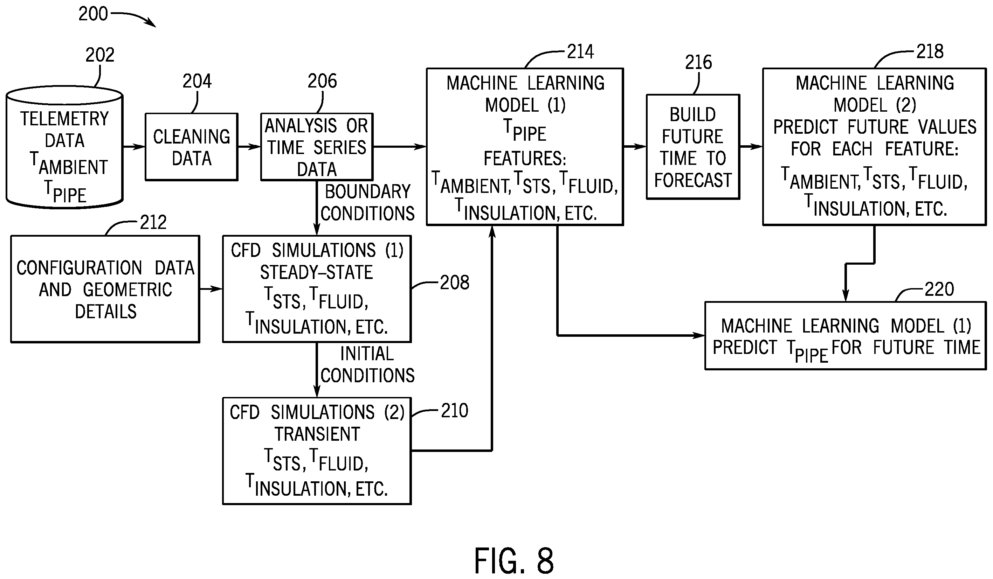

FIG. 8 illustrates a diagram of another example hybrid AI-CFD process 200 for predicting future pipeline temperature data. The process 200 may be similar to the process 170 of FIG. 5 and, thus, certain description above of the process 170 of FIG. 5 may apply to the process 200 of FIG. 8 and, in turn, certain description below of the process 200 of FIG. 8 may apply to the process 170 of FIG. 5. Accordingly, the process 200 of FIG. 8 can integrate data analysis, CFD simulations, and machine learning models to predict the temperature of a pipe (T_{PIPE}) over time. Further, the steps of process 200 can be stored as computer-readable instructions in memory of the management system 108 and executed by one or more of the controllers 140, 142, 128. And, in some embodiments, the management system 108 and, more specifically, one or more of the controllers 140, 142, 128 can include modules configured to carry out operations of one or more of the blocks described below.

Referring still to FIG. 8, the process 200 includes a telemetry data collection block 202, a cleaning data block 204, a time series data analysis block 206, a steady-state CFD simulations block 208, a transient CFD simulations block 210, a configuration data block 212, a first machine learning block 214, a future time to forecast build block 216, a second machine learning model block 218, and a future time prediction block 220.

At the telemetry data collection block 202, telemetry data is collected as inputs to the process 200, including, but not limited to, ambient temperature (T_{AMBIENT}) and pipe temperature (T_{PIPE}). The telemetry data is passed to the cleaning data block 204 to ensure its quality for further analysis. For example, at the cleaning data block 204, the collected telemetry data is cleaned to remove any noise, outliers, or inconsistencies. As such, the cleaning data block 204 can help ensure accurate analysis and modeling. Next, at the time series data analysis block 206, the cleaned data undergoes time series analysis to extract meaningful patterns, trends, and insights. This analysis can help provide a better understanding of how temperature varies over time.

At the steady-state CFD simulations block 208, steady-state CFD simulations are conducted to calculate steady-state temperatures, including, for example, STS Heat Tube temperature (T_{STS}, shown in FIG. 6), Fluid temperature (T_{FLUID}), and Insulation temperature (T_{INSULATION}). Inputs to the steady-state CFD simulations block 208 include the cleaned telemetry data as well as configuration data and geometric details of the system from the configuration data block 212.

The output of the steady-state CFD simulations block 208 can establish the initial condition for the transient CFD simulations block 210. That is, at the transient CFD simulations block 210, CFD simulations are performed to account for time-dependent ambient and pipe temperature changes. The post-processed data from this simulation can include time-series data for T_{STS}, T_{FLUID}, T_{INSULATION}.

At the first machine learning block 214, a first machine learning model is trained to predict the pipe temperature (T_{PIPE}) based on the features derived from both the telemetry data and the CFD simulations. For example, the features used for this first machine learning model can include T_{AMBIENT}, T_{STS}, T_{FLUID}, T_{INSULATION}, and other relevant parameters from the CFD simulations. At the future time to forecast build block 216, a future timeline can be built for which temperature predictions are required. This block can help with forecasting and planning purposes. At the second machine learning model block 218, a second machine learning can be trained model to predict future values for each of the features (e.g., T_{AMBIENT}, T_{STS}, T_{FLUID}, T_{INSULATION}, etc.) using the time series data obtained from the telemetry data and the CFD simulations.

Finally, at the future time prediction block 220, the predicted features from the second machine learning model can be fed into the first machine learning model to predict the future pipe temperature (T_{PIPE}) over the forecasted time period. As shown in FIG. 8, the process 200 includes a loop where the output of the second machine learning model feeds back into the first machine learning model, creating a continuous feedback loop for predicting T_{PIPE} as new data becomes available. This iterative process allows for real-time predictions and adjustments.

In some examples, the management system 108 can also implement a predictive control action via the controller 140 based on the output future temperature predictions. For example, if the predicted T_{PIPE} falls below a predetermined threshold within the forecasted time period, the controller 140 may selectively energize one or more heat tubes 154 along at-risk segments of the pipeline 102 to a desired temperature. For example, such action may override a normal operation at which the controller 140 would not selectively energize the heat tubes 154 due to a current temperature not being below a temperature threshold. In some other examples, if the predicted T_{PIPE} is to exceed a predetermined threshold within the forecasted time period, the controller 140 may selectively deenergize one or more heat tubes 154 to reduce energy consumption (e.g., overriding a normal operation that would continue energizing heat tubes 154 due to a current temperature being below the temperature threshold). In some examples, the controller 140 may independently control various segments of the heat tubes 154 along the pipeline 102.

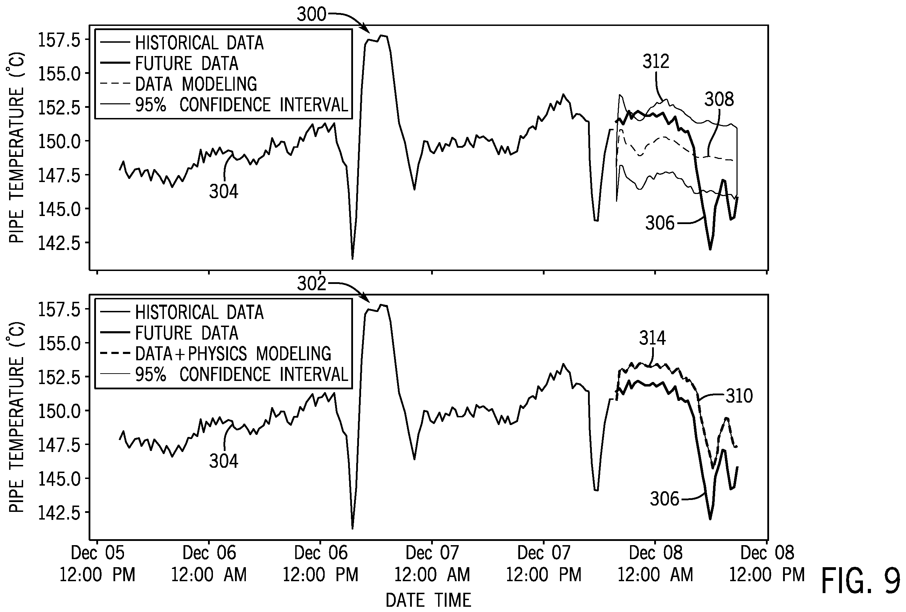

Generally, the combination of the boundary conditions/telemetry data and the processed data set found by the CFD simulation(s) can result in the machine learning model(s) producing more accurate and precise future predictions compared to using boundary conditions alone. For example, with reference to FIG. 9, a comparison between a traditional modeling methodology and the hybrid AI-CFD processes described herein is illustrated. The historical pipe maintenance temperature is illustrated next to the experimental observations of forthcoming data. Both the traditional model and the hybrid AI-CFD process model use historical data that is obtained from distributed temperature sensing measurements, such as the temperature sensing system 106. However, the hybrid AI-CFD process also incorporates supplementary "historical" data, such as the processed data that is generated through the CFD simulations (e.g., during step 174 of the process 170 of FIG. 5, and the CFD simulation blocks 208, 210 of the process 200 of FIG. 8).

Looking to FIG. 9, a first graph 300 reflects future data produced through traditional data modeling ("data modeling") and a second graph 302 reflects future data produced through hybrid AI-CFD modeling as described above ("data+physics modeling"). That is, in the traditional data modeling of graph 300, prediction of pipe temperature is accomplished by looking at past values of telemetry data only, T_{PIPE}, T_{AMBIENT}, pipe and ambient temperature as obtained from the temperature sensing system 106 (e.g., a DTS unit). In the hybrid AI-CFD modeling, prediction of pipe temperature is accomplished by looking at past values of telemetry data and post-processed CFD data, i.e., T_{PIPE}, T_{AMBIENT}, T_{STS}, T_{FLUID}, T_{INSULATION}, pipe, ambient, STS heat-tube temperature, fluid, insulation layer, as obtained from the temperature sensing system 106 and CFD simulations, as described above. To create the graphs 300, 302, both the traditional modeling set and the hybrid AI-CFD modeling set were provided with the same boundary conditions. That is, 160 hours of historical temperature data was used as the boundary conditions to predict the next 40 hours of data.

In both graphs 300, 302 a first line 304 illustrates the historical temperature data of the pipeline 102, and a second line 306 illustrates the actual future data of the pipeline 102 (i.e., the temperature of the pipeline 102 was tracked and plotted in the second line 306). As noted above, both the traditional data and hybrid AI-CFD modeling approaches utilized the historical data, e.g., obtained from DTS measurements. However, the hybrid AI-CFD approach incorporates supplementary historical data generated through CFD modeling. Within this context, a third line 308 (dashed) in the first graph 300 illustrates the predicted future data produced by the traditional modeling set, and a fourth line 310 in the second graph 302 illustrates the predicted future data produced by a hybrid AI-CFD process 170 (e.g., such as the data set of predicted future temperatures 198 of FIG. 7 or the output of future time prediction block 220 of FIG. 8). Additionally, a boxed region 312 surrounding the third line 308 in the first graph 300 illustrates the 95% confidence interval for the predicted future data produced by the traditional modeling set. Similarly, a shaded region 314 surrounding the fourth line 310 in the second graph 302 illustrates the 95% confidence interval for the predicted future data produced by the hybrid AI-CFD process.

It is noteworthy that the hybrid AI-CFD modeling approach effectively forecasts future trends when compared to actual future data, whereas the traditional data modeling approach merely represents the mean variation of temperature over the future timeline. For example, as illustrated in FIG. 9, the hybrid AI-CFD data (the fourth line 310) more closely matches the trends and actual values of the second line 306 (i.e., the actual future data) compared to the traditional modeling data (the third line 308). As such, the hybrid AI-CFD process more accurately predicted the future temperature data of the pipeline 102 than the traditional methodology without requiring further acquisition of real historical datapoints. Further, the second shaded region 314 is much narrower than the first shaded region 312, indicating that the hybrid AI-CFD process more precisely predicted the future temperature data of the pipeline 102 than the traditional methodology.

Furthermore, in the present example of FIG. 9, statistical analyses of the data was completed to estimate the nature and quality of the predictions. Notably, transitioning from traditional data modeling to hybrid AI-CFD modeling resulted in an enhancement of Root Means Square Error (RMSE), from 2.75°C with traditional data modeling to 2.33°C with hybrid AI-CFD modeling. RMSE is the square root of the average of squared differences between prediction and experimental observation. Of particular significance is the improvement in prediction quality, highlighted by a substantial reduction in the maximum width of the 95% confidence interval from 5.39°C with traditional data modeling (i.e., the first shaded region 312) to 0.52°C with hybrid AI-CFD modeling (i.e., the second shaded region 314). It is recognized that a wider confidence interval corresponds to decreased confidence in the accuracy of the estimate, as the uncertainty regarding the true parameter value increases with a wider interval. This significant decrease in the confidence interval for hybrid AI-CFD modeling, leading to an indiscernibly thin shaded region 314 highlights the framework's remarkable predictive accuracy and reliability. When evaluated against experimental observations, the correlation coefficient for the hybrid AI-CFD modeling was found to be 0.95, compared to 0.67 for traditional data modeling alone. This highlights the superior performance of the hybrid AI-CFD modeling approach in terms of correlation with experimental data.

In light of the above, the hybrid AI-CFD model according to some embodiments can result in providing a future time series of temperature data with improved prediction quality and confidence. For example, in some embodiments, the AI-CFD process described above can forecast thermal conditions of a pipeline within an accuracy of within 3% for future timeframes. Such predictions can help users more accurately plan for predictive maintenance of the pipeline. That is, such predictions and trends analysis may allow the controller 140 to anticipate and alert a user regarding updated maintenance schedules, e.g., to perform maintenance earlier than previously anticipated. For example, the controller 140 can display (via the display 143) the predicted future pipe temperature to a user with an updated maintenance recommendation using the predicted future pipe temperature. Further, in some applications, such predictions can also help users anticipate when fluid in a pipeline may be susceptible to freezing and, optionally, allow the controller 140 to override existing temperature control thresholds and energize heat trace cables prior to fluid temperature reaching the existing temperature control threshold.

Another benefit of the hybrid AI-CFD model is that it can be continuously updated, for example, to only weigh elements of past behavior that is consistent with current states. For example, model predictions for a flowing pipeline can weigh certain historical data, while model predictions for a stagnant pipeline may weigh certain other historical data, or reset to only include relevant historical data.

Although the above examples are described with reference to pipeline heat tracing, the hybrid AI-CFD process model may also be applicable to other thermal management systems. Non-limiting examples include aerospace systems, fuel transfer systems, or any transport lines for various types of fluids. More generally, the hybrid AI-CFD process model can be trained to predict overall system performance, detect false conditions, and provide proactive guidance for maintenance across a wide range of industrial applications.

Features which are described in the context of separate embodiments may also be provided in combination in a single embodiment. Features which are, for brevity, described in the context of a single embodiment, may also be provided separately or in any suitable sub-combination, or combined as new embodiments. The applicant hereby gives notice that new claims may be formulated to one or more features and/or combinations of such features during the prosecution of the present application or of any further application derived therefrom. Features of the system(s) described may be incorporated into/used in corresponding methods and vice versa.

It will be appreciated by those skilled in the art that while the invention has been described above in connection with particular embodiments and examples, the invention is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein. Various features and advantages of the invention are set forth in the following claims.

## Claims

1. A system comprising:
a data collection module to collect historical temperature data of a component;
a calculation module to analyze the historical temperature data of the component and produce processed historical temperature data of the component; and
a machine learning module that receives a plurality of inputs, including the historical temperature data and the processed historical temperature data, to predict and output future temperature data of the component.

2. The system of claim 1, wherein the data collection module is to output data arrays comprising temperature values and corresponding location values along a pipeline that transports a fluid.

3. The system of claim 2, wherein the data arrays further comprise corresponding time values associated with the temperature values and corresponding location values.

4. The system of claim 2 or claim 3, wherein the machine learning module is trained based on features derived from the historical temperature data, the processed historical temperature data, or boundary conditions, or a combination thereof; and, optionally,
wherein the boundary conditions comprise a pipeline temperature and an ambient temperature data of the pipeline.

5. The system of claim 1 or of any of claims 2 to 4, wherein the machine learning module comprises a first machine learning module and a second machine learning module, wherein an output of the second machine learning module is configured to feed back into the first machine learning module and create a continuous feedback loop for predicting future temperature as new historical temperature data becomes available; and/or
wherein the machine learning module is configured to output future temperature data over a predetermined time period.

6. A method comprising:
collecting a first data set relating to temperature data of a pipeline over a time period;
processing the first data set using a computational fluid dynamics analysis that outputs a second dataset related to additional temperature data of the pipeline over the time period;
recording the second data set; and
providing the first data set and the second data set to a machine learning module that outputs a third data set relating to predicted future temperature data for the pipeline.

7. The method of claim 6, wherein the first data set comprises an array including temperature values, corresponding location values, and corresponding time values.

8. The method of claim 6 or claim 7, wherein the machine learning module is configured to be trained based on the first data set and the second data set.

9. The method of claim 6, claim 7 or claim 8, further comprising energizing a plurality of heat trace cables based on the temperature data; and/or
further comprising energizing a plurality of heat trace cables based on the predicted future temperature data.

10. The method of claim 6 or of any of claims 7 to 9, further comprising displaying the predicted future temperature data to a user with an updated maintenance recommendation based on the predicted future temperature data.

11. A system for predicting future temperature of a pipeline, including:
a fiber-optic distributed-temperature sensing (DTS) system to track and record temperature data related to a pipeline over a time period;
a computation fluid dynamics (CFD) simulator that receives the temperature data as an input and outputs processed temperature data over the time period; and
a machine learning module that receives the temperature data and the processed temperature data and outputs predicted future temperature data for the pipeline.

12. The system of claim 11, further comprising a display to display the predicted future temperature data.

13. The system of claim 11 or claim 12, wherein the fiber-optic DTS system comprises at least one fiber optic line disposed along the pipeline configured to generate backscattered signal; and, optionally,
wherein the fiber optic line comprises a first fiber optic line positioned on one side of the pipeline and a second fiber optic line positioned on an opposite side of the pipeline.

14. The system of claim 11, claim 12 or claim 13, further comprising: a heat trace cable operably coupled to the pipeline; and a controller to selectively energize the heat trace cable based on the temperature data; and/or
wherein the controller is to selectively energize the heat trace cable based on the predicted future temperature data.

15. The system of claim 11 or of any of claims 12 to 14, wherein the temperature data comprises pipe temperature and ambient temperature.
